# DEMANDE DE BREVET EUROPEEN

(11) **EP 4 115 843 A2**
(43) Date de publication de la demande: **11.01.2023**
(21) Numéro de dépôt: 22183380.9
(22) Date de dépôt: 06.07.2022
(51) Int. Cl.: A61C 7/00, A61C 7/14, A61C 7/12, B22F 5/00

(54) **PROCÉDÉ DE FABRICATION D'UN APPAREIL ORTHODONTIQUE**

(30) Priorité: 07.07.2021 FR 2107343
(71) Demandeur: 3C, 93150 Le Blanc-Mesnil (FR)
(72) Inventeur: MELKA, Harry, 75017 PARIS (FR); DRAI, Gabriel, 94210 SAINT-MAUR-DES-FOSSES (FR); SAADA, Mickael, 75020 PARIS (FR); COUDERC, Paul, 93500 PANTIN (FR)
(74) Mandataire: Lavoix

(57) **Abrégé**

La présente invention concerne un procédé de fabrication d'un appareil orthodontique (12), comprenant les étapes suivantes :
- réalisation d'une image numérisée d'une rangée (14) de dents dans une position initiale ; puis dans une position recherchée ; puis
- réalisation d'une image numérisée de l'appareil orthodontique, ledit appareil comprenant un arc orthodontique (20) et au moins un élément (22) de fixation à une dent.

L'appareil orthodontique est configuré pour être assemblé à la rangée de dents dans la position initiale, de sorte que l'arc adopte une forme plane lorsque ladite rangée est passée dans la position recherchée.

Le procédé comporte ensuite les étapes suivantes : réalisation d'une image numérisée de l'arc orthodontique dans ladite forme plane ; puis fabrication de l'arc à partir de ladite image, par la découpe d'une plaque d'un matériau solide à mémoire de forme.

## Description

La présente invention concerne un procédé de fabrication d'un appareil orthodontique, ledit appareil orthodontique étant configuré pour être assemblé à une rangée de dents d'un patient de sorte à faire passer ladite rangée de dents d'une première position initiale à une deuxième position recherchée, le procédé comprenant les étapes suivantes : réalisation d'une première image numérisée de la rangée de dents dans la première position initiale ; puis réalisation, à partir de la première image numérisée, d'une deuxième image numérisée de la rangée de dents dans la deuxième position recherchée ; puis réalisation, à partir des première et deuxième images numérisées, d'une troisième image numérisée de l'appareil orthodontique, ledit appareil orthodontique comprenant un arc orthodontique et au moins un élément de fixation à une dent de la rangée.

L'invention s'applique particulièrement aux appareils orthodontiques de type lingual, disposés sur la face postérieure non visible des dents. L'invention s'applique également aux appareils orthodontiques de type vestibulaire, disposés sur la face antérieure visible des dents.

Par « appareil orthodontique », on entend préférentiellement un appareil dit actif, apte à exercer sur les dents d'un patient un effort tendant à déplacer lesdites dents de la position initiale, considérée comme insatisfaisante, vers une position souhaitée, correspondant notamment à un alignement des dents.

Il est connu de réaliser au moins partiellement des appareils orthodontiques dans des matériaux à mémoire de forme, de manière à déplacer les dents vers la position souhaitée. Par exemple, la demande FR 20 13000 au nom de la Demanderesse, non encore publiée, décrit la réalisation d'un tel appareil orthodontique à partir d'une image conçue numériquement.

Dans la demande évoquée ci-dessus, l'appareil orthodontique est réalisé par impression 3D, qui nécessite un équipement approprié.

L'invention a notamment pour but de permettre la réalisation d'un appareil orthodontique à partir d'un équipement plus accessible.

A cet effet, l'invention a pour objet un procédé de fabrication du type précité, dans lequel : l'appareil orthodontique est configuré pour être assemblé à la rangée de dents dans la première position, de sorte que l'arc orthodontique adopte une forme sensiblement plane lorsque ladite rangée de dents est passée dans la deuxième position ; et le procédé comporte ensuite les étapes suivantes : réalisation, à partir de la troisième image numérisée, d'une quatrième image numérisée de l'arc orthodontique dans ladite forme sensiblement plane ; puis fabrication de l'arc orthodontique à partir de la quatrième image, ladite fabrication comprenant une étape de découpe d'une plaque d'un matériau solide à mémoire de forme.

Suivant d'autres aspects avantageux de l'invention, le procédé de fabrication comporte l'une ou plusieurs des caractéristiques suivantes, prises isolément ou suivant toutes les combinaisons techniquement possibles :
- le matériau solide à mémoire de forme est le nitinol ;
- l'étape de découpe est réalisée alors que la plaque de nitinol est au moins partiellement immergée dans de l'eau à une température apte à maintenir ladite plaque de nitinol en phase austénitique ;
- la découpe de la plaque de matériau solide à mémoire de forme est réalisée par un moyen choisi parmi un faisceau laser seul, un faisceau laser entouré d'un jet d'eau et un jet d'eau sous pression additionné de particules abrasives ;
- le procédé de fabrication comprend ensuite une étape d'assemblage de l'arc orthodontique avec au moins un élément de fixation à une dent du patient, de sorte à former l'appareil orthodontique.

L'invention se rapporte en outre à un appareil de découpe pour la mise en œuvre d'une découpe d'une plaque d'un matériau solide à mémoire de forme, ledit appareil comprenant : une buse de découpe, s'étendant selon un axe principal ; et un dispositif de maintien de la plaque, ledit dispositif de maintien comprenant : un premier élément solidaire de la buse de découpe ; et un deuxième élément comprenant : une surface frontale, apte à entrer en contact avec la plaque ; et un orifice central traversant, débouchant sur ladite surface frontale ; le deuxième élément étant mobile par rapport au premier élément par translation selon l'axe principal, la buse de découpe étant apte à coulisser dans l'orifice central.

Suivant d'autres aspects avantageux de l'invention, l'appareil de découpe comporte l'une ou plusieurs des caractéristiques suivantes, prises isolément ou suivant toutes les combinaisons techniquement possibles :
- le dispositif de maintien comporte : une tige de liaison, apte à déterminer une distance axiale maximale entre les premier et deuxième éléments ; et un ressort de compression, disposé entre lesdits premier et deuxième éléments, ledit ressort étant dans un état de compression non nul à la distance axiale maximale entre les premier et deuxième éléments ;
- l'appareil comprend plusieurs tiges de liaison et plusieurs ressorts de compression disposés angulairement autour de l'axe principal ;
- la buse de découpe est munie de moyens de découpe choisis parmi un faisceau laser seul, un faisceau laser entouré d'un jet d'eau et un jet d'eau sous pression additionné de particules abrasives.

L'invention se rapporte en outre à un procédé de fabrication d'un appareil orthodontique tel que décrit ci-dessus, dans lequel l'étape de découpe de la plaque de matériau solide à mémoire de forme est réalisée à l'aide d'un appareil de découpe tel que décrit ci-dessus.

L'invention sera mieux comprise à la lecture de la description qui va suivre, donnée uniquement à titre d'exemple non limitatif et faite en se référant aux dessins sur lesquels :
- la figure 1 est une vue de dessus d'un appareil orthodontique réalisé à partir d'un procédé de fabrication selon un mode de réalisation de l'invention ;
- la figure 2 est une vue d'une étape du procédé de fabrication de l'appareil orthodontique de la figure 1 ;
- la figure 3 est une vue schématique d'une installation permettant de réaliser l'étape du procédé de fabrication représentée à la figure 2 ;
- les figures 4 et 5 sont des vues d'un appareil inclus dans l'installation de la figure 3 selon une variante de réalisation de l'invention ; et
- la figure 6 est un logigramme des étapes d'un procédé de fabrication selon un mode de réalisation de l'invention.

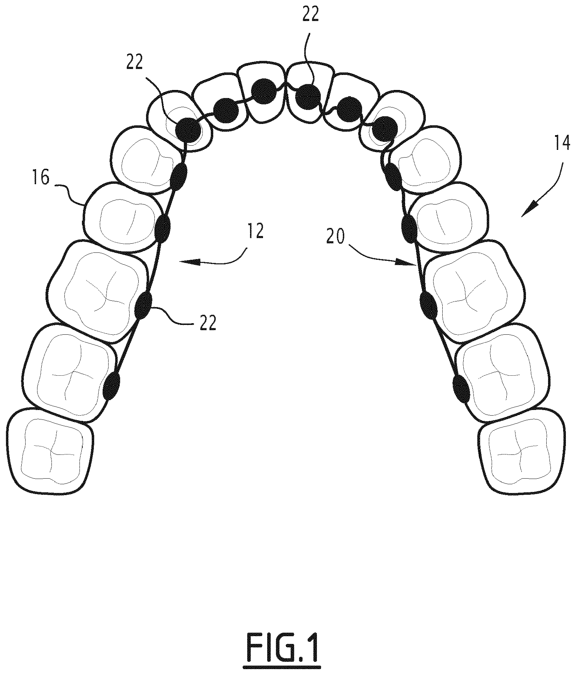

La figure 1 montre un appareil orthodontique 12 assemblé à une rangée 14 de dents 16 d'un patient.

Dans le mode de réalisation représenté, l'appareil orthodontique 12 est configuré pour être assemblé à une face postérieure des dents 16. En d'autres termes, l'appareil orthodontique 12 est un dispositif de type lingual.

En variante non représentée, l'appareil orthodontique est configuré pour être assemblé à une face antérieure visible des dents, l'appareil orthodontique étant de type dit vestibulaire.

L'appareil orthodontique 12 comprend un arc orthodontique 20 et une pluralité d'éléments d'attache 22.

L'arc orthodontique 20 a sensiblement la forme d'un fil réalisé dans un matériau solide à mémoire de forme. De préférence, ledit matériau solide est métallique.

Plus préférentiellement, l'arc orthodontique 20 est réalisé en nitinol. Le nitinol est un alliage de nickel et de titane dans des proportions proches de 1 :1.

Le nitinol est connu pour ses propriétés de transformation réversible à l'état solide. A haute température, le nitinol possède une structure primitive de cube cristallin, dite état austénitique. À basse température, le nitinol se transforme spontanément en une structure plus complexe de cristal, dite état martensitique. Le changement de structure, réversible, se produit à une température de transformation. La dite température est comprise entre 0°C et 45 °C.

Ces propriétés induisent la mémoire de forme du nitinol et également une super-élasticité. La super-élasticité apparaît à des températures situées juste au-dessus de la température de transformation.

Les éléments d'attache 22 sont disposés le long de l'arc orthodontique 20. Chaque élément d'attache 22 de l'appareil orthodontique 12 est destiné à être fixé à une dent 16 distincte de la rangée 14.

Selon un mode de réalisation, au moins un élément d'attache 22 est monté fixe sur l'arc orthodontique 20. Selon un autre mode de réalisation, au moins un élément d'attache 22 est monté coulissant sur l'arc orthodontique 20. Les éléments d'attache 22 sont par exemple de type brackets ou perles.

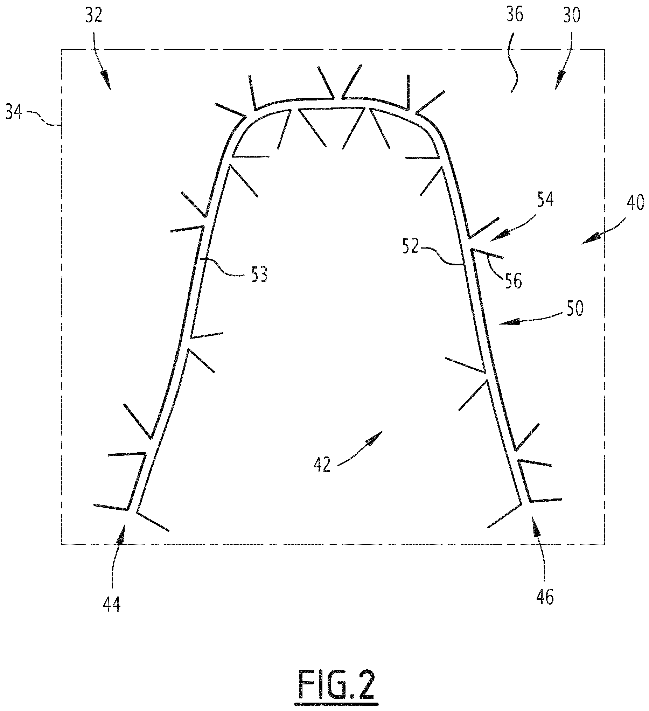

La figure 2 représente une étape de réalisation d'un procédé de fabrication de l'arc orthodontique 20.

Plus précisément, la figure 2 représente une plaque 30 de matériau solide à mémoire de forme, et une découpe 32 ménagée dans ladite plaque 30.

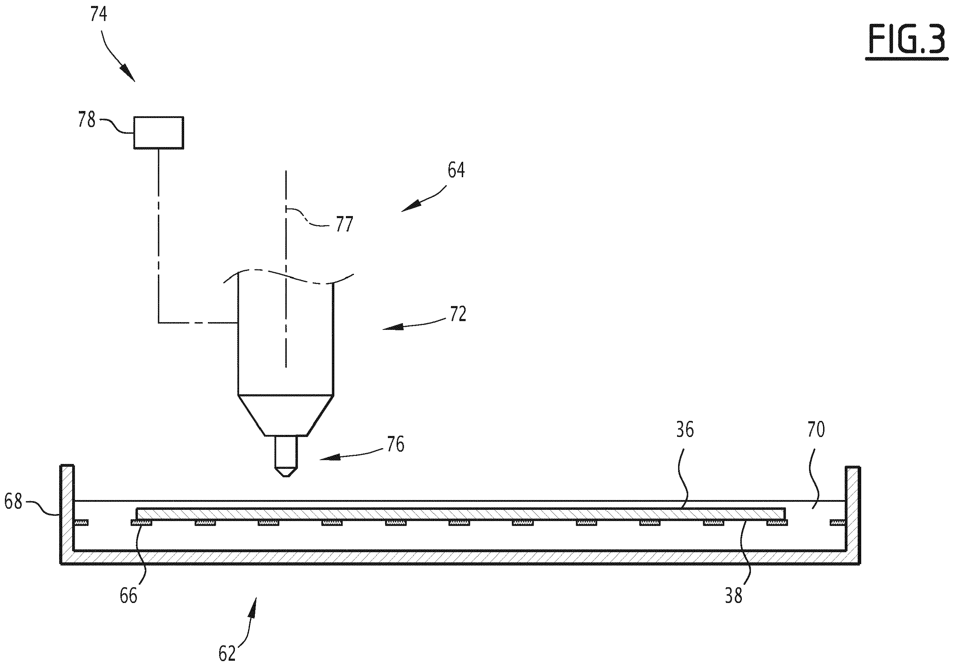

La plaque 30, également visible sur la figure 3, est délimitée par des bords 34 et comporte une première 36 et une deuxième 38 faces opposées. Seule la première face 36 est visible sur la figure 2.

La plaque 30 a une épaisseur relativement faible entre les première 36 et deuxième 38 faces, ladite épaisseur étant par exemple comprise entre 0,1 mm et 2 mm.

De préférence, la découpe 32 est disposée à une distance non nulle des bords 34 de la plaque 30.

La découpe 32 a une forme générale globalement concave, correspondant à une forme de l'arc orthodontique 20. La découpe 32 comporte une partie externe 40 et une partie interne 42 qui s'étendent de manière sensiblement parallèle. Les termes « externe » et « interne » s'entendent par rapport à la concavité de la découpe 32.

La découpe 32 comporte une première 44 et une seconde 46 extrémités, entre lesquelles s'étend chacune des parties externe 40 et interne 42.

Chacune des parties externe 40 et interne 42 de la découpe 32 comporte au moins une fente s'étendant de manière continue sur la plaque 30 entre deux extrémités fermées, ladite fente étant traversante entre les première 36 et deuxième 38 faces.

De préférence, entre les première 44 et seconde 46 extrémités, au moins l'une des parties externe 40 et interne 42 de la découpe 32 est discontinue. Dans le mode de réalisation représenté, chacune des parties externe 40 et interne 42 de la découpe 32 est discontinue.

Par « discontinue », on entend que la partie externe 40 et/ou interne 42 comporte une pluralité de tronçons 50. Chaque tronçon 50 forme une fente s'étendant de manière continue sur la plaque 30 entre deux extrémités fermées, ladite fente étant traversante entre les première 36 et deuxième 38 faces.

Chaque tronçon 50 comporte au moins une portion centrale 52, lesdites portions centrales des tronçons dessinant un profil de l'arc orthodontique 20. La zone 53de la plaque 30 disposée entre les portions centrales 52 des tronçons 50 de la partie externe 40 et les portions centrales 52 des tronçons 50 de la partie interne 42 est destinée à former ledit arc orthodontique.

Les portions centrales 52 de deux tronçons 50 consécutifs de la partie externe 40 ou interne 42 sont séparés par un ancrage 54, formé par la plaque 30. Ledit ancrage 54 est de faible longueur par rapport aux portions centrales 52, ladite longueur étant cependant non nulle.

De préférence, au moins un tronçon 50 comporte en outre deux portions d'extrémité 56, prolongeant chaque extrémité de la portion centrale 52. Chaque portion d'extrémité 56 est sensiblement rectiligne, de faible longueur par rapport à la portion centrale 52 et est sensiblement inclinée par rapport à ladite portion centrale.

Dans le mode de réalisation représenté, chaque tronçon 50 comporte deux portions d'extrémité 56 telles que décrites ci-dessus. Les portions d'extrémité 56 de deux tronçons 50 consécutifs, situés de part et d'autre d'un même ancrage 54, figurent sensiblement une forme en V.

Comme visible sur la figure 2, les portions d'extrémité 56 des tronçons 50 de la partie externe 40 sont orientées vers l'extérieur de la concavité de la découpe 32 ; et inversement, les portions d'extrémité 56 des tronçons 50 de la partie interne 42 sont orientées vers l'intérieur de la concavité de ladite découpe.

La figure 3 est une vue schématique d'une installation 60 de mise en œuvre d'un procédé de fabrication de l'arc orthodontique 20. L'installation 60 concerne en particulier la réalisation de la découpe 32 dans la plaque 30 décrite ci-dessus.

L'installation 60 comporte un support 62, recevant la plaque 30, et un dispositif de découpe 64.

Le support 62 matérialise de préférence une surface horizontale, venant au contact d'une face 38 de la plaque 30. Dans le mode de réalisation représenté, ladite surface horizontale est matérialisée par une grille 66, par exemple métallique.

Dans le mode de réalisation représenté, le support 62 comporte en outre une cuve 68 à laquelle sont fixés des bords de la grille 66. Comme il sera détaillé par la suite, ladite cuve permet d'immerger dans de l'eau 70 la plaque 30 durant l'étape de découpe.

De manière optionnelle, le support 62 comporte en outre des moyens de fixation (non représentés) de la plaque 30 à la grille 66, par exemple des pinces aptes à être assemblées aux bords de ladite plaque.

Le dispositif de découpe 64 comporte un appareil de découpe 72 et un dispositif de pilotage 74. L'appareil de découpe 72 comporte notamment une buse 76 s'étendant selon un axe 77. Dans le mode de réalisation représenté, l'axe 77 est vertical.

De préférence, l'appareil de découpe 72 est apte à découper la plaque 30 selon une méthode choisie parmi la projection d'un jet d'eau chargé de particules abrasives, une émission laser ou encore une émission laser guidée par un jet d'eau.

Le dispositif de pilotage 74 comporte : un bras motorisé (non représenté), apte à déplacer la buse 76 de l'appareil de découpe parallèlement à la surface de la plaque 30 ; et un module électronique 78 de pilotage, apte à commander ledit bras motorisé pour le déplacement de la buse 76 ainsi que le fonctionnement de l'appareil de découpe 72.

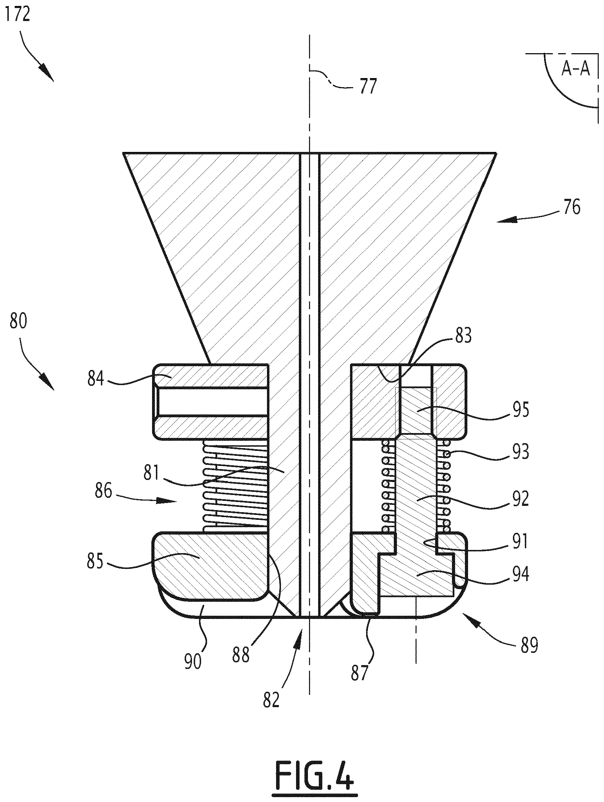

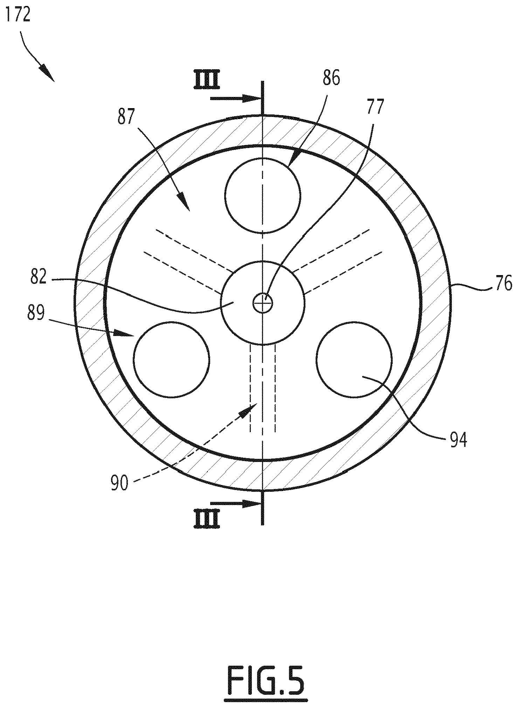

Les figures 4 et 5 montrent une variante 172 de réalisation de l'appareil de découpe. L'appareil de découpe 172 est apte à remplacer l'appareil 72 dans l'installation 60 décrite ci-dessus.

Dans ce mode de réalisation, l'appareil de découpe 172 comprend une buse 76 telle que décrite ci-dessus et un organe de maintien 80 assemblé à ladite buse.

Comme visible sur la vue en coupe de la figure 4, la buse 76 comporte un canon 81 de forme sensiblement cylindrique de révolution, s'étendant selon l'axe 77 entre une extrémité 82 de sortie et un épaulement 83.

L'organe de maintien 80 comporte : une rondelle de fixation 84, une rondelle d'appui 85 et au moins deux éléments 86 de liaison.

Chacune des rondelles de fixation 84 et d'appui 85 est perforée en son centre et destinée à prendre place autour du canon 81 de la buse.

La rondelle de fixation 84 est fixée audit canon, en appui sur l'épaulement 83.

La rondelle d'appui 85 comporte une surface 87 d'appui, destinée à venir au contact de la plaque 30 durant l'étape de découpe. De préférence, ladite surface 87 est réalisée dans un matériau apte à minimiser les frottements, tel que le PVC.

La rondelle d'appui 85 comporte en outre : un orifice central 88, destiné à recevoir le canon 81 de la buse ; au moins deux cavités 89, destinées à recevoir les éléments 86 de liaison ; et au moins deux rainures 90, s'étendant entre l'orifice central 88 et une périphérie de la rondelle d'appui. Les cavités 89 et les rainures 90 sont aménagées en creux par rapport à la surface 87 d'appui.

Chaque cavité 89 est prolongée par une ouverture 91 traversante de la rondelle 85 d'appui.

Chacun des éléments 86 de liaison comporte une vis 92 et un ressort 93. Chaque vis 92 s'étend parallèlement à l'axe 77 et comporte un fût lisse, chaque extrémité dudit fût étant prolongée respectivement par une tête 94 élargie et par une portion filetée 95. La tête élargie présente des dimensions transversales supérieures à un diamètre de l'ouverture 91.

La portion filetée 95 de chaque vis 92 est assemblée à la rondelle de fixation 84. Le fût de chaque vis 92 traverse une ouverture 91, la tête 94 élargie correspondante étant disposée dans la cavité 89 débouchant sur ladite ouverture.

Ainsi, la rondelle d'appui 85 est apte à coulisser le long du canon 81 de la buse et des vis 92 des éléments de liaison, une amplitude dudit coulissement selon l'axe 77 étant limitée par la mise en butée des têtes 94 de vis au fond des cavités 89.

Le ressort 93 de chaque élément 86 de liaison est un ressort hélicoïdal de compression, disposé autour du fût de la vis 92. Chaque ressort 93 est comprimé lorsque l'organe de maintien est assemblé. Ainsi, chacun desdits ressorts exerce un effort contre les rondelles de fixation 84 et d'appui 85, de sorte à écarter axialement l'une de l'autre lesdites rondelles.

Dans le mode de réalisation représenté, l'organe de maintien 80 comporte trois éléments de liaison 86, disposés angulairement de manière régulière autour du canon 81 de la buse. De même, la rondelle d'appui 85 comporte trois cavités 89 et trois rainures 90. Chaque rainure 90 est disposée entre deux cavités 89.

Lors de l'assemblage de la buse 76 et de l'organe de maintien 80, le vissage des vis 92 dans la rondelle de fixation 84 permet de régler la distance axiale avec la rondelle d'appui 85, de sorte que l'extrémité 82 de sortie du canon 81 affleure la surface 87 d'appui.

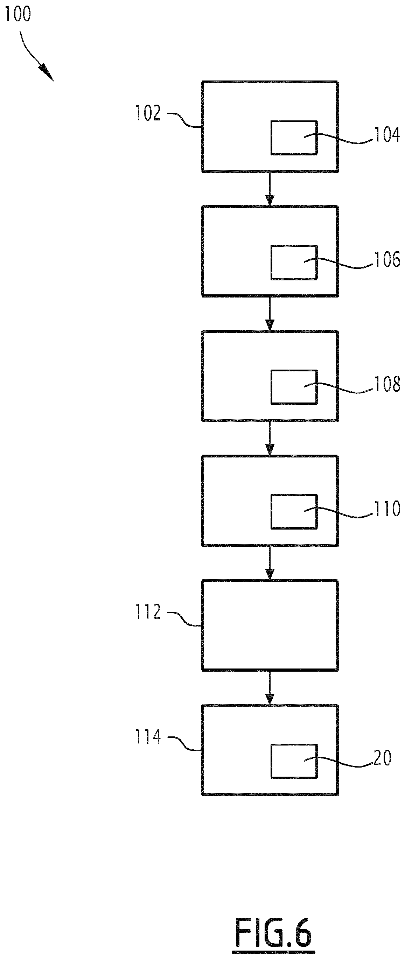

Un procédé 100 de fabrication de l'appareil orthodontique 12 va maintenant être décrit, à l'appui de la figure 6.

Dans une première étape 102, la rangée 14 de dents 16 du patient à traiter est modélisée en scannant la mâchoire dudit patient. Les dents sont alors dans une première position, dite position initiale. Une image numérisée 104 de la rangée de dents est obtenue.

Ensuite, à partir de l'image numérisée 104 des dents en position initiale, une image modifiée 106 est élaborée à l'aide d'un logiciel approprié. Cette image modifiée 106, ou setup, correspond à une deuxième position recherchée des dents du patient.

Ensuite, à l'aide d'un logiciel approprié, une image numérisée 108 de l'appareil orthodontique 12 est réalisée à partir de l'image numérisée 104 des dents en position initiale et du setup 106.

Cette image numérisée 108 comprend notamment la forme et les dimensions de l'appareil orthodontique 12 apte à faire passer la rangée 14 de dents de la première position initiale à la deuxième position recherchée. L'appareil orthodontique 12 modélisé dans l'image 108 comprend l'arc orthodontique 20 et la pluralité d'éléments d'attache 22 précédemment décrits.

En outre, la forme et les dimensions de l'appareil orthodontique 12 définis dans l'image numérisée 108 sont telles que l'arc orthodontique 20 adopte une forme sensiblement plane lorsque la rangée 14 de dents, assemblée à l'appareil orthodontique 12, est dans la deuxième position recherchée.

Ensuite, l'image numérisée 108 de l'appareil orthodontique 12 est traitée pour en extraire l'image de l'arc orthodontique 20 de ladite forme sensiblement plane ; et ladite image de l'arc orthodontique 20 subit un traitement supplémentaire de sorte à en extraire une image numérisée 110 de la découpe 32 décrite ci-dessus, intégrant les tronçons 50 et les attaches 34.

Ladite image numérisée 110 de la découpe 32 est communiquée au module électronique 78 de pilotage de l'installation 60 décrite ci-dessus.

Le procédé 100 de fabrication comporte ensuite une étape 112 de réalisation de la découpe 32 dans une plaque 30 de matériau à mémoire de forme, à l'aide de ladite installation 60. L'étape 112 se déroule comme suit :
Tout d'abord, la plaque 30 est disposée sur la grille 66 du support 62 et de préférence fixée audit support.

Dans le cas où la plaque 30 est en nitinol, la cuve 68 est de préférence remplie d'eau 70 à l'état liquide, de sorte à immerger ladite plaque 30. L'eau 70 est plus préférentiellement maintenue à une température apte à maintenir ladite plaque de nitinol en phase austénitique et à l'état super-élastique. La température de l'eau est par exemple comprise entre 40 °C et 100 °C.

Ensuite, le dispositif de découpe 64 est mis en fonctionnement. Le dispositif de pilotage 74 déplace la buse 76 au-dessus de la plaque 30 de manière à reproduire le tracé de la découpe 32 tel que modélisé par l'image numérisée 110. Le module électronique 78 déclenche le fonctionnement de l'appareil de découpe 72 aux endroits correspondant à des tronçons 50 de ladite découpe, et stoppe ledit fonctionnement aux endroits correspondant à des ancrages 34.

La présence des portions d'extrémité 56 dans la configuration des tronçons 50 permet une meilleure précision dans le tracé des portions centrales 52 par l'appareil de découpe, ainsi que le maintien de l'arc orthodontique 20 en cours de découpe.

Le maintien de la plaque à l'état super-élastique évite des déformations intempestives de ladite plaque pendant la découpe.

En variante à l'appareil de découpe 72 de la figure 3, l'installation 60 comporte l'appareil de découpe 172 des figures 4 et 5. Dans ce cas, durant le déplacement de la buse 76 au-dessus de la plaque 30, la surface 87 d'appui glisse au contact de la première face 36 de la plaque 30. Les ressorts 93 des éléments 86 de liaison permettent à ladite surface 87 de rester plaquée contre la plaque 30 lors du déplacement. Des déplacements intempestifs de ladite plaque sont ainsi évités, pour une meilleure précision du tracé de la découpe 32.

Dans le cas où l'appareil de découpe 72 fonctionne à l'aide d'un faisceau laser entouré d'un jet d'eau ou d'un jet d'eau sous pression additionné de particules abrasives, les rainures 90 permettent d'évacuer latéralement l'eau projetée par la buse 76. Ladite évacuation diminue les risques de bouchage de la buse 76 par des particules déplacées par l'eau.

La plaque 30 dans laquelle est ménagée la découpe 32, comme représenté sur la figure 2, est ainsi obtenue.

Dans une étape 114, l'arc orthodontique 20 est ensuite extrait de la plaque 30 en sectionnant les ancrages 34, par exemple à l'aide d'un outil manuel.

Pour réaliser l'appareil orthodontique 12, l'arc orthodontique 20 ainsi obtenu est ensuite assemblé aux éléments d'attache 22.

L'appareil orthodontique 12 est alors mis en place sur les dents 16 du patient selon des méthodes connues, lesdites dents étant alors dans la première position initiale.

Durant cette étape de mise en place, l'arc orthodontique 20 est déformé et perd sa forme sensiblement plane. Les propriétés de mémoire de forme dudit arc incitent ledit arc à reprendre sa forme, ce qui exerce sur les dents 16 un effort tendant à les déplacer dans la deuxième position recherchée.

Selon un mode de réalisation, l'étape 112 de découpe décrite ci-dessus est configurée de sorte à réaliser successivement plusieurs découpes 32 réparties sur la surface de la plaque 30, chaque découpe 32 correspondant à un arc orthodontique 20 particulier qui aboutira à un appareil orthodontique 12 particulier. Une telle étape 112 permet ainsi d'optimiser l'utilisation de l'installation 60 pour la réalisation simultanée de plusieurs appareils orthodontiques.

## Revendications

1. Procédé de fabrication d'un appareil orthodontique (12), ledit appareil orthodontique étant configuré pour être assemblé à une rangée (14) de dents (16) d'un patient de sorte à faire passer ladite rangée de dents d'une première position initiale à une deuxième position recherchée, le procédé comprenant les étapes suivantes :
- réalisation d'une première image numérisée (104) de la rangée (14) de dents dans la première position initiale ; puis
- réalisation, à partir de la première image numérisée (104), d'une deuxième image numérisée (106) de la rangée de dents dans la deuxième position recherchée ; puis
- réalisation, à partir des première et deuxième images numérisées, d'une troisième image numérisée (108) de l'appareil orthodontique, ledit appareil orthodontique comprenant un arc orthodontique (20) et au moins un élément (22) de fixation à une dent de la rangée ;
ledit procédé étant **caractérisé en ce que** :
- l'appareil orthodontique est configuré pour être assemblé à la rangée de dents dans la première position, de sorte que l'arc orthodontique adopte une forme sensiblement plane lorsque ladite rangée de dents est passée dans la deuxième position ; et
- le procédé comporte ensuite les étapes suivantes : réalisation, à partir de la troisième image numérisée, d'une quatrième image numérisée de l'arc orthodontique dans ladite forme sensiblement plane ; puis fabrication de l'arc orthodontique à partir de la quatrième image, ladite fabrication comprenant une étape (112) de découpe d'une plaque (30) d'un matériau solide à mémoire de forme.

2. Procédé de fabrication selon la revendication 1, dans lequel le matériau solide à mémoire de forme est le nitinol.

3. Procédé de fabrication selon la revendication 2, dans lequel l'étape de découpe est réalisée alors que la plaque (30) de nitinol est au moins partiellement immergée dans de l'eau (70) à une température apte à maintenir ladite plaque de nitinol en phase austénitique.

4. Procédé de fabrication selon l'une des revendications précédentes, dans lequel la découpe de la plaque (30) de matériau solide à mémoire de forme est réalisée par un moyen (72) choisi parmi un faisceau laser seul, un faisceau laser entouré d'un jet d'eau et un jet d'eau sous pression additionné de particules abrasives.

5. Procédé de fabrication selon l'une des revendications précédentes, comprenant ensuite une étape d'assemblage de l'arc orthodontique (20) avec au moins un élément (22) de fixation à une dent du patient, de sorte à former l'appareil orthodontique.

6. Appareil (72) de découpe pour la mise en œuvre d'une découpe d'une plaque (30) d'un matériau solide à mémoire de forme, ledit appareil comprenant :
- une buse (76, 81) de découpe, s'étendant selon un axe principal (77) ; et
- un dispositif (80) de maintien de la plaque,
ledit dispositif de maintien comprenant :
- un premier élément (84) solidaire de la buse de découpe ; et
- un deuxième élément (85) comprenant : une surface frontale (87), apte à entrer en contact avec la plaque (30) ; et un orifice central (88) traversant, débouchant sur ladite surface frontale ;
le deuxième élément étant mobile par rapport au premier élément par translation selon l'axe principal, la buse (81) de découpe étant apte à coulisser dans l'orifice central.

7. Appareil selon la revendication 6, dans lequel le dispositif de maintien comporte : une tige (92) de liaison, apte à déterminer une distance axiale maximale entre les premier et deuxième éléments ; et un ressort (93) de compression, disposé entre lesdits premier et deuxième éléments, ledit ressort étant dans un état de compression non nul à la distance axiale maximale entre les premier et deuxième éléments.

8. Appareil selon la revendication 7, comprenant plusieurs tiges (92) de liaison et plusieurs ressorts (93) de compression disposés angulairement autour de l'axe principal.

9. Appareil (72) selon l'une des revendications 6 à 8, dans lequel la buse (76) de découpe est munie de moyens de découpe choisis parmi un faisceau laser seul, un faisceau laser entouré d'un jet d'eau et un jet d'eau sous pression additionné de particules abrasives.

10. Procédé de fabrication d'un appareil orthodontique (12) selon l'une des revendications 1 à 5, dans lequel l'étape de découpe de la plaque (30) de matériau solide à mémoire de forme est réalisée à l'aide d'un appareil de découpe (72) selon l'une des revendications 6 à 9.
